# EUROPÄISCHE PATENTSCHRIFT

(11) **EP 1 329 471 B1**
(45) Veröffentlichungstag und Bekanntmachung des Hinweises auf die Patenterteilung: **06.06.2012**
(21) Anmeldenummer: 03001115.9
(22) Anmeldetag: 20.01.2003
(51) Int. Cl.: C08G 18/16, C08G 18/76

(54) **Verfahren zur Herstellung von Polyurethanen und/oder Polyharnstoffen unter Verwendung von Amin-N-oxid-Katalysatoren und Zusammensetzungen enthaltend Amin-N-oxide**
Process for preparation of polyurethanes and/or polyureas using amine N-oxide catalysts and compositions comprising amine N-oxides
Procédé de préparation de polyuréthanes et/ou de polyurées utilisant des N-oxydes d'amines comme catalyseurs et compositions contenant des N-oxydes d'amines

(30) Priorität: 18.01.2002 US 52228
(43) Veröffentlichungstag der Anmeldung: 23.07.2003
(73) Patentinhaber: Performance Chemicals Handels GmbH, 21244 Buchholz (DE)
(72) Erfinder: Frauendorfer, Prof.Dr. Erich, 26723 Emden (DE); Klockemann, Werner, 21244 Buchholz (DE)
(74) Vertreter: Müller Schupfner & Partner

(56) Entgegenhaltungen:
- EP-A- 0 532 939
- US-A- 3 173 896
- US-A- 3 173 897
- DATABASE WPI Section Ch, Week 198532 Derwent Publications Ltd., London, GB; Class A25, AN 1985-195272 XP002231793 & SU 1 134 572 A (AS LATV WOOD CHEM), 15. Januar 1985 (1985-01-15)

## Beschreibung

Gegenstand der Erfindung ist ein Verfahren zur Herstellung von Polyurethanen und/oder Polyharnstoffen unter Verwendung von Aminoxiden als Katalysator und eine Zusammensetzung enthaltend ein Aminoxid, ein Polyisocyanat mit zumindest zwei Isocyanatgruppen und eine Verbindung mit zumindest zwei reaktiven Wasserstoffatomen.

Als Polyurethane (PUR) werden Polymere mit sehr unterschiedlicher Zusammensetzung bezeichnet. Allen Polyurethanen ist gemeinsam, dass sie nach dem Diisocyanat-Polyadditionsverfahren hergestellt werden und als charakteristisches Kettenglied Urethan-Gruppen aufweisen. Neben der Urethan-Bindung können unter anderem Harnstoff-, Amid-, Biuret-, Acylharnstoff-, Uretonimin-, Isocyanurat- und Carbodiimid-Bindungen durch die Isocyanat-Reaktion ausgebildet werden.

In vielen industriell bedeutenden Polyurethan-Kunststoffen verknüpfen die Urethangruppen Polyalkylenether- oder Polyestersequenzen, die ihrerseits Molekulargewichte von 150 bis 8000 g/mol aufweisen können.

Bedingt ist die Vielfalt möglicher Verknüpfungen nicht nur durch die Reaktivität der Isocyanat-Bindung, sondern auch durch die Vielzahl unterschiedlicher gegenüber der Isocyanat-Gruppe reaktionsfähiger Monomere. Weiterhin können hinsichtlich ihrer Funktionalität unterschiedliche Monomere gleichzeitig nebeneinander eingesetzt werden. Die gebräuchlichsten Monomere neben den Diisocyanaten weisen Alkohol-, Carbonsäure- und/oder Amin-Gruppen auf. Daneben spielt aber auch die Reaktion der Isocyanat-Gruppe mit sich selbst zu Polyisocyanuraten und mit Wasser eine wichtige Rolle.

Die NCO-Gruppe ist sehr empfindlich gegenüber Katalysatoren der verschiedensten Art, wobei das Ausmaß der Reaktionsbeschleunigung je nach Reaktionstyp sehr unterschiedlich ist. Sowohl Lewis-Basen als auch Lewis-Säuren sind wirksame Katalysatoren. Die wichtigsten Lewis-Basen sind tertiäre Amine unterschiedlichster Struktur. Die wichtigsten katalytisch wirkenden Lewis-Säuren sind zinnorganische MetallVerbindungen. Die Katalysatoren werden oft als System, d.h. als Kombination mehrerer Katalysatoren, etwa einer Lewis-Base mit einer Lewis-Säure, eingesetzt. Der Katalysator/das Katalysator-System wird zur Beschleunigung von zwei manchmal drei Hauptreaktionen eingesetzt, die gleichzeitig und oft in Konkurrenz zueinander ablaufen.

Eine dieser Reaktionen (Kettenverlängerungsreaktion) ist die kettenverlängernde Isocyanat-Hydroxyl-Reaktion, bei der ein hydroxylhaltiges Molekül mit einem isocyanathaltigem Molekül unter Bildung eines Urethans reagiert. Bei dieser Reaktion wird ein sekundäres Stickstoffatom in den Urethangruppen erzeugt. Sind neben den Hydroxylgruppen auch noch andere reaktive Wasserstoff aufweisende Gruppen, wie etwa Amin-Gruppen, anwesend, tragen auch andere chemische Verknüpfungen (z.B. Harnstoff-Gruppen) zum Kettenaufbau bei.

Ein weiterer Reaktionstyp ist die vernetzende Isocyanat-Urethan-Reaktion (Vernetzungsreaktion oder auch Gelreaktion), bei der ein isocyanathaltiges Molekül mit einer Urethangruppe reagiert, die ein sekundäres Stickstoffatom enthält.

Die für viele Polyurethane mit Zellstruktur wichtige weitere Reaktion ist die Isocyanat-Wasser-Reaktion, bei der ein Molekül mit Isocyanat-Endgruppe unter Bildung einer Harnstoff-Gruppe verlängert wird und Kohlendioxid erzeugt. Das freiwerdende Gas wirkt als Treibmittel, um den Schaum zu blähen oder das Blähen des Schaums zu unterstützen. Diese Reaktion wird auch als Blas- oder Treibreaktion bezeichnet. Durch die Isocyanat-Wasser-Reaktion wird "in-situ" entweder das gesamte Gas oder auch nur ein Teil davon für die Schaumreaktion erzeugt.

Alle drei Reaktionen sollen mit optimal aufeinander abgestimmter Geschwindigkeit verlaufen. Darüber ist es oft gewünscht, dass das Ausmaß an der Gesamtaktivität in Bezug auf einen der oben genannten Reaktionstypen phasenverschoben ist, damit eine gute Schaumstruktur erhalten wird. Wenn die Kohlendioxidentwicklung im Vergleich zur Kettenverlängerung zu rasch verläuft, fällt der Schaum zusammen. Wenn die Kettenverlängerung im Vergleich zur Kohlendioxidentwicklung zu rasch erfolgt, wird die Steighöhe des Schaums begrenzt. Bei Fehlen einer ausreichenden Vernetzung (Gelreaktion) ist der Schaum nicht stabil.

Je nach gewünschter Ausbildung der Polyurethan-Kunststoffe (Weichschaumstoffe, Blockschaumstoff, Beschichtung, Klebstoff, Dichtmittel etc.) kann ein anderes Verhalten gewünscht sein. Für Weichschaumstoffe ist z.B. eine starke Vernetzung in der ersten Schaumbildungsphase unerwünscht, weil diese bedingt durch die hohe Viskosität bzw. hohe Feste des Schaums eine ausreichende Steighöhe des Schaums und ein Ausbilden eines Schaums geringer Dichte und verhindert.

Tertiäre Amine sind als Katalysatoren für alle drei Reaktionstypen bekannt, wobei tertiäre Amine je nach Struktur ein sehr unterschiedliches Verhalten gegenüber Kettenverlängerungsreaktion, Vernetzungsreaktion, Blasreaktion zeigen können. Einige wenige der tertiären Amine, sind z.B. im wesentlichen ausschließlich für die Isocyanat-Wasser-Reaktion wirksame Katalysatoren (z.B. Dimorpholinodiethylether). Viele tertiäre Amine sind allerdings keine guten Katalysatoren für die Kettenverlängerungsreaktion, weshalb bei Verwendung dieser Katalysatoren oft Präpolymere eingesetzt werden.

Die Verwendung von Aminoxiden als Katalysatoren ist an sich z.B. aus der der US 3,173,896 bekannt, ohne dass diese die besondere Reaktionsführung, Auswahl der Aminoxide, die Cope-Eliminierung und Einbaubarkeit derartig umgesetzter Aminoxide offenbaren. Aus der EP-A-0532939 B1 ist die Verwendung langkettiger Aminoxide zur Herstellung heißhärtender Weichschäume mit hoher Offenzelligkeit bekannt, wobei die Aminoxide als weichmachende Additive eingesetzt werden.

Die Herstellung von Polyurethan-Schaumstoffen durch Umsetzung von höhermolekularen vorzugsweise Polyester- oder Polyetheresterpolyolen und gegebenenfalls Kettenverlängerungs- und/oder Vernetzungsmitteln mit organischen und/oder modifizierten organischen Polyisocyanaten ist bekannt und wird in zahlreichen Patent- und Literaturveröffentlichungen beschrieben. Polyurethan-Schaumstoffe werden insbesondere für Möbel, Matratzen, Liegen und Sitzpolster eingesetzt.

Es ist auch Aufgabe der vorliegenden Erfindung, einen Katalysator bereitzustellen, der es erlaubt, emissionsarme bzw. emissionsfreie Polyurethane herzustellen und/oder die sehr störenden Geruchsbelästigungen der Amine während des Arbeitsprozesses zu eliminieren bzw. ganz wesentlich zu reduzieren. Emissionsarme bzw. emissionsfreie PU-Schaumstoffe im Sinne der Erfindung sind solche, die sowohl sehr niedrige Fogging-Werte (Niederschlag von organischen Verbindungen auf Oberflächen) als auch sehr niedrige VOC-Werte (volatile organic compounds), d.h. eine sehr geringe Tendenz zur Freigabe gasförmiger organischer Verbindungen, aufweisen, und insbesondere solche die niedrige Amin-Emissionswerte aufweisen, z.B. solche von kleiner 3 ppm, vorzugsweise kleiner 1 ppm, Amin, bezogen bzw. stammend von dem eingesetzten Polyurethan-Katalysator (bestimmt nach der Daimler-Chrysler Methode PBVWT 709).

Die zunehmende Sensibilisierung der Verbraucher gegenüber vermeidbaren Belastungen durch Chemikalien und der sich erweiternde Personenkreis mit allergischen Reaktionen gegenüber Chemikalien in der Raumluft erfordert eine möglichst umfassende Reduzierung aller flüchtigen Bestandteile in Polyurethan - Kunststoffen. Nachteil der bekannten Aminkatalysatoren für Polyurethankunststoffe ist, dass diese häufig einen deutlich wahrnehmbaren Geruch entfalten, während dies bei den erfindungsgemäßen Katalysatoren wegen der niedrigen Flüchtigkeit nicht der Fall ist.

Ein weiterer Nachteil bekannter tertiärer Amin-Katalysatoren ist, dass diese bis zum Einbau - soweit diese eingebaut werden - häufig leicht flüchtig sind und die Balance zwischen ausreichender Fließfähigkeit und schneller Endaushärtung oft schwierig einzustellen ist. In Anwendungen, bei denen eine Hohlraumausfüllung durch den Schaum gewünscht ist, z.B. bei Kühlschrankanwendungen, kann eine geringe Fließfähigkeit und in Bezug auf die geringe Fließfähigkeit eine zu schnelle Aushärtung zu einer unzureichenden Ausfüllung der Hohlräume führen.

Diese und andere Aufgaben werden erfindungsgemäß gelöst durch ein Verfahren zur Herstellung von Polyurethan- und/oder Polyharnstoff-Schaumstoffen gemäß Anspruch 1 und den Gegenstand der weiteren unabhängigen Ansprüche.

Bevorzugte Ausführungsformen sind Gegenstand der Unteransprüche bzw. nachfolgend erläutert. Die im erfindungsgemäßen Verfahren einsetzbaren Ausgangskomponenten sind nachstehend unter (1) bis (8) beispielhaft erläutert. Vorzugsweise ist Wasser bei der Umsetzung zugegen.

### (1) Polyisocyanate (Verbindungen enthaltend mindestens zwei Isocyanat-Gruppen)

Als Polyisocyanate eignen sich die bekannten organischen, z. B. aliphatischen, cycloaliphatischen, arylaliphatischen, cycloaliphatisch-aromatischen und vorzugsweise aromatischen Isocyanate mit mindestens zwei Isocyanat-Gruppen. Gebräuchliche Vertreter aliphatischer Polyisocyanate sind z.B. 1,6-Diisocyanatohexan, 3,5,5-Trimethyl-1-isocyanato-3-isocyanato-methyl-cyclohexan, 4,4'-Diisocyanato-dicyclohexylmethan, trimeres Hexandiisocyanat und 2,6-Diisocyanatohexansäuremethylester. Gebräuchliche aromatische Polyisocyanate sind 2,4-Diisocyanato-toluol, 1,5-Diisocyanatonaphthalin und 4,4'-Diisocyanatodiphenylmethan.

Im einzelnen seien als aromatische Polyisocyanate beispielhaft genannt: 4,4- und 2,4-Diphenylmethandiisocyanat (MDI), Mischungen aus MDI-Isomeren und Polyphenyl-polymethylen-polyisocyanaten, 2,4- und 2,6-Toluylen-diisocyanat (TDI) sowie die entsprechenden handelsüblichen Isomerenmischungen.

Geeignet sind auch sogenannte modifizierte mehrwertige Isocyanate, d. h. Produkte, die durch chemische Umsetzung organischer Verbindungen mit Polyisocyanaten erhalten werden. Beispielhaft genannt seien Ester-, Harnstoff-, Biuret-, Allophanat-, Isocyanurat- und vorzugsweise Carbodiimid-, Uretonimin- und/ oder Urethangruppen enthaltende Di- und/oder Polyisocyanate.

Im einzelnen kommen beispielsweise in Betracht: Urethangruppen enthaltende Prepolymere mit einem NCO-Gehalt von 2 bis 16 Gew.-% oder Quasiprepolymere Prepolymere mit einem NCO-Gehalt von 16 bis 32 Gew.-%, die hergestellt werden durch Umsetzung von Diolen, Oxalkylenglykolen und/oder Polyoxyalkylenglykolen mit Polyisocyanaten. Vorzugsweise ist das Polyisocyanat bei Raumtemperatur eine Flüssigkeit. In Sinne dieser Erfindung umfassen der Begriff "Flüssigkeit" bzw. "flüssig" auch folgende Zustände: partikulär in einer Flüssigkeit suspendiert/emulgiert, mit einer Flüssigkeit gemischt oder in einer Flüssigkeit gelöst.

### (2) Verbindungen mit mindestens zwei reaktiven Wasserstoffatomen

Hierfür kommen über die in Anspruch 1 genannten Verbindungen (B) hinaus weiterhin grundsätzlich alle Verbindungen in Betracht, die gegenüber der Isocyanat-Gruppe zumindest zwei reaktive Wasserstoffatome aufweisen. Dies sind etwa organische Verbindungen mit Amin- (N-H), Hydroxy- (O-H) und/oder Säure- (C(=O)-O-H) Gruppen. Die bei der Herstellung von Polyurethanen üblichen H-funktionellen vorzugsweise höhermolekularen Verbindungen sind Polyether- und Polyesterpolyole, aber auch Polythioetherpolyole, Polyesteramide, hydroxylgruppenhaltige Polyacetale und hydroxylgruppenhaltige aliphatische Polycarbonate oder Mischungen aus mindestens zwei der genannten Verbindungen. Besonders geeignet sind Polyetherpolyole, wie etwa Polypropylenoxid oder Polyethylenoxid bzw. deren Copolymerisate, die mit Hilfe di- oder mehrfunktioneller Alkohole als Startermoleküle hergestellt worden sind. Die Polyether-Komponente weist vorzugsweise ein Molekulargewicht zwischen 150 bis kleiner 8000 g/mol, insbesondere 300 und 3000 g/mol, und eine Funktionalität von 1,5 bis 6 auf.

Zur Herstellung der erfindungsgemäß einsetzbaren Polyester werden di- und trifunktionelle Polyole mit Dicarbonsäuren bzw. deren Anhydriden polykondensiert. Geeignete Polyole sind z.B. Ethylenglykol, 2-Propandiol, 1,4-Butandiol, 1,6-Hexandiol, Glycerin, Trimethylolpropan, Pentaerythrit, Glycerin und Hexantriol. Geeignete Dicarbonsäuren bzw. Anhydride sind Bernsteinsäure, Adipinsäure, Phthalsäure und Isophthalsäure. Die Polyester weisen vorzugsweise ein Molekulargewicht zwischen 300 und 3000 auf und eine verhältnismäßig hohe Hydroxyzahl bei einer verhältnismäßig niedrigen Säurezahl.

Geeignet sind auch Mischungen aus Polyetherpolyolen und Polyether-polyaminen. Geeignete Polyesterpolyole können beispielsweise aus organischen Dicarbonsäuren mit 2 bis 12 Kohlenstoffatomen, und mehrwertigen Alkoholen mit 2 bis 12 Kohlenstoffatomen, hergestellt werden.

Zu den einsetzbaren Polyesteramiden zählen z. B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Harnstoffgruppen lassen sich in die erfindungsgemäß hergestellten Polyurethane durch Einsatz von Wasser oder Diaminen einführen. Ethylendiamin, 1,2-Propylendiamin, Diaminocyclohexan oder Piperizin wirken z.B. als Kettenverlängerer oder Vernetzungsmittel. Polyurethan-Präpolymere mit Amin-Endgruppen sind reaktiver als solche mit Hydroxygruppe, so daß diese Polyurethane schneller aushärten. Ebenso können Verbindungen mit Polymercapto-Gruppen eingesetzt werden.

Die Verbindungen mit mindestens zwei reaktiven Wasserstoffatomen weisen vorzugsweise Molekulargewichte von 150 bis 8000 g/mol, besonders bevorzugt 300 bis 3000 g/mol, auf und sind vorzugsweise unabhängig hiervon bei Raumtemperatur (25°C) flüssig.

### (3) Niedermolekulare Kettenverlängerungs- und/ oder Vernetzungsmittel (fakultativ)

Als derartige Mittel kommen polyfunktionelle, insbesondere di- und trifunktionelle, Verbindungen mit Molekulargewichten von 18 bis ungefähr 400 g/mol, vorzugsweise von 62 bis ungefähr 300 g/mol, in Betracht. Verwendet werden beispielsweise Di- und/oder Trialkanolamine, wie z. B. Diethanolamin und Triethanolamin, aliphatische Diole und/oder Triole mit 2 bis 6 Kohlenstoffatom im Alkylenrest, wie z. B. Ethan-, 1,4-Butan-, 1,5-Pentan-, 1,6-Hexandiol, Glycerin und/oder Trimethylolpropan, Wasser und niedermolekulare Ethoxylierungs- und/oder Propoxylierungsprodukte, hergestellt aus den vorgenannten Dialkanolaminen, Trialkanolaminen, Diolen und/oder Triolen sowie aliphatischen und/oder aromatischen Diaminen.

Vorzugsweise eingesetzt werden Dialkanolamine, Diole und/oder Triole und insbesondere Ethandiol, Butandiol-1,4, Hexandiol-1,6, Diethanolamin, Trimethylolpropan, Pentaerythrit, Glycerin oder Hexantriol oder Mischungen aus mindestens zwei der vorgenannten Verbindungen. Aber auch einige der weiter unten beschriebenen erfindungsgemäß eingesetzten Katalysatoren können bei Einbau wegen ihrer mehreren gegenüber Isocyanaten reaktiven Gruppen als Vernetzer wirken.

### (4) Treibmittel (fakultativ)

Im Bereich der Polyurthan-Schäume werden physikalisch wirkende Treibmittel eingesetzt. Besonders geeignet sind Substanzen, welche gegenüber den organischen, gegebenenfalls modifizierten Polyisocyanaten inert sind und Siedepunkte über 20°C, vorzugsweise über 40°C, bei Atmosphärendruck aufweisen. Beispiele derartiger, vorzugsweise verwendbarer Substanzen sind niedrigsiedende Kohlenwasserstoffe, wie beispielsweise n/i-Butan, Pentan, cyclo-Pentan, Ether wie Dimethylether und halogenierte Kohlenwasserstoffe wie z.B. R134a und R152a, lösungs- oder komplex gebundenes Kohlendioxid oder "Reaktiv-Kohlendioxid" (z.B. Carbamid-Verbindungen).

Zu den Treibmitteln, welche zur Herstellung von Polyurethan-Schaumstoffen verwendet werden, gehören auch Wasser, oder in Bezug auf PU-Montageschäume Luftfeuchtigkeit, die mit Isocyanatgruppen unter Bildung von Kohlendioxid als Treibgas reagiert.

### (5) Flammschutzmittel (fakultativ)

Zur Erhöhung der Flammwidrigkeit unter gleichzeitiger Reduzierung der Rauchgasdichte im Brandfalle werden als Flammschutzmittel beispielsweise halogenierte, organische Verbindungen vorzugsweise Phosphorsäureester in wirksamen Mengen verwendet. Weiterhin kommen als Flammschutzmittel halogenierte, meistens bromierte, aromatische Polyesterpolyole, Melamin-Derivate, Stärke, Phosphorverbindungen, wie z.B. Trikresylphosphat, einbaubare Phosphorverbindungen und anorganische Salze und vorzugsweise modifizierte oder unmodifizierte Ammoniumpolyphosphate zum Einsatz.

### (6) Stabilisatoren

Zur Vermeidung von Kollapsen und zum Aufbau einer feinen, gleichförmigen Zellstruktur werden Schaumstabilisatoren eingesetzt. Dabei handelt es sich um oberflächenaktive Substanzen, hauptsächlich polyethermodifizierte Polysiloxane, welche zur Unterstützung der Homogenisierung der Ausgangsstoffe dienen und gegebenenfalls auch geeignet sind, die Zellstruktur der Schaumstoffe zu regulieren. Genannt seien Silikonöle wie Siloxan-Oxyalkylen-Mischpolymerisate und andere Organopolysiloxane, ox(C2- bis C4-)alkylierte (C1- bis C18-)Alkylphenole und ox(C2- bis C4-)alkyllierte(C8- bis C24-) Fettalkohole.

### (7) Weitere Hilfsmittel und/oder Zusatzstoffe (fakultativ)

Der Reaktionsmischung können gegebenenfalls auch noch weitere Hilfsmittel und/oder Zusatzstoffe einverleibt werden. Genannt seien beispielsweise oberflächenaktive Stoffe, Porenregler, fungistatisch und bakteriostatisch wirkende Substanzen, Farbstoffe, Pigmente und Füllstoffe, Weichmacher, Trocknungsmittel, Füllstoffe, latente Härter, Haftungsverbesserer, Weitere mögliche Zusätze sind Hydrolysestabilisatoren, Oxydationsstabilisatoren, UV-Stabilisatoren, Flammschutzmittel oder auch Farbstoffe, vorzugsweise in Form von Farbpasten.

### (8) Weitere Katalysatoren

Die erfindungsgemäßen Katalysatoren werden, bezogen auf den gesamten Herstellungsprozess, in Kombination mit anderen Polyurethan-Katalysatoren gemäß Anspruch 1 eingesetzt. Dies können basische Polyurethankatalysatoren, beispielsweise tertiäre

Amine, wie Dimethylbenzylamin, Dicyclohexylmethylamin, Dimethylcyclohexylamin, Bis-(dimethylaminopropyl)-ether, N-Methyl- bzw. N-Ethylmorpholin, N-Dimethylaminoethylpiperidin, 1,2-Dimethylimidazol, N,N,N',N',-Tetra(C1- bis C6-alkyl)ethylendiamin, Dimethylaminoethanol, 2-(N,N-Dimethylaminoethoxy)ethanol, Tris-(dialkylaminoalkyl)-hexahydrotriazin, Di-(4-dimethylaminocyclohexyl)-methan, Bis-(dimethylaminoethyl)ether, Tetramethylguanidin und Bis-dimethylaminomethylphenol und insbesondere Triethylendiamin (1,4-Diazabicyclo[2,2,2]octan) sein.

Daneben aber auch Imidazol, N-Alkylimidazole, insbesondere N-Propylimidazol, Bisdimethylamino(C1- bis C6-)alkylether, Dimorpholinodialkylether, insbesondere Bisdimethylaminodiethylether, Dimethyl-2-(2-aminoethoxy)(C1- bis C6-)alkanole, insbesondere Dimethyl-2-(2-aminoethoxy)ethanol, N,N,N',N',N'-Pentamethyldipropylentriamin, N,N,N',N',N'-Pentamethyldietylentriamin, N',N'-Dimethylaminoethyl-N-methylalkanolamine, insbesondere N',N'-Dimethylaminoethyl-N-methylethanolamin, N,N,N'-Trimethyl-N'-hydroxyethyl-bis(aminoalkyl)ether insbesondere N,N,N'-Trimethyl-N'-hydroxyethyl-bis(aminoethyl)ether, N,N'-bis(3-dimethylaminopropyl)amino-alkanole, insbesondere N,N'-bis(3-dimethylaminopropyl)amino-2-propanol, 1,3-Bis(dimethylamino)-alkanole insbesondere 1,3-Bis(dimethylamino)-2-propanol, N,N,N',N',N"-Pentamethyldiethylentriamin und N,N,N',N',-Tetramethyliminobispropylamin,

Genannt seien auch N-(2-Hydroxypropyl)imidiazol, N-(2-Hydroxyethyl)imidiazol, Tris(3-dimethylamino)propylamine, 1,3,5-Tris(3-dimethylaminopropyl)hexahydrotriazin, Bis-(dimethylaminopropyl)amino-2-propanol, Dimethylaminopropyldipropanolamin, N-Methyldicyclohexylamin, 2,4,6-Tris(dimethylaminomethyl)phenol, N,N-Dimethylpiperazin, 1-Dimethylaminoethyl-4-methylpiperazine, N,N-Dimethylaminoethyl-N'-methylaminoethanol, N-(3-Aminopropyl)imdazol und Bis-(dimethylaminopropyl)amino-2-propanol.

Ebenso geeignet sind deren Ammoniumsalze, z.B. als mit organischen Säuren geblockte tertiäre Amine.

Geeignet sind jedoch auch Eisen(II)-chlorid, Zinkchlorid, Kaliumacetat oder insbesondere Metallsalze organischer Verbindungen, insbesondere des Wismuts und Zinns, wie Dialkylzinndicarbonsäureester (z.B. Dibutylzinndilaurat oder Zinndiethylhexoat), Kaliumoctoate, Bleioctoat, Zinndioctoat, Dibutylzinn-bis-dodecylmercaptit, Dibutylzinnmercaptid und Blei-phenyl-ethyl-dithiocarbaminat.

Die erfindungsgemäß eingesetzten Katalysatoren werden zusammen mit den tertiären Aminen oder metallorganische Verbindungen (Metallsalzen organischer Verbindungen) verwendet.

Im Rahmen der Erfindung können die Polyurethane nach unterschiedlichen Herstellungsverfahren hergestellt sein. Die Polyurethan-Schaumstoffe können nach dem One-Shot-Verfahren durch Vermischen von zwei Komponenten hergestellt werden. Hierfür müssen die beiden Komponenten vor Herstellung der Polyurethane nur noch intensiv gemischt werden. Die Reaktionsmischungen können in offenen oder geschlossenen Formwerkzeugen sowie zu Blockschaumstoffen verschäumt werden. Nach dem One-Shot-Verfahren werden Polyurethane, ggf. auch in Anwesenheit von Lösungsmitteln, in Gegenwart sämtlicher Reaktionskomponenten hergestellt.

Man unterscheidet hiervon das Präpolymerverfahren. Polyurethan-Präpolymere sind Zwischenstufen der Isocyanat-Polyaddition. Man unterscheidet NCO-Präpolymere mit endständigen NCO-Gruppen und Hydroxy-Präpolymere. Die NCO-Präpolymere haben eine besondere Bedeutung, da sie mit einer Vielzahl von aktiven Wasserstoff enthaltenden Verbindungen ausgehärtet werden können. Sie werden durch Umsetzung von Di- bzw. Polyhydroxyverbindungen mit einem molaren Überschuß an Di- bzw. Polyisocyanat erhalten. Diese Gemische können noch einen beträchtlichen Prozentsatz des monomeren Isocyanates enthalten.

Zweikomponentensysteme bestehen meist aus einer Polyhydroxykomponente - die auch schon durch ein Diisocyanat zu einem Präpolymer mit endständigen OH-Gruppen verlängert sein kann - als Hauptkomponente und einem Isocyanat-Addukt als Vernetzer. Zweikomponentensysteme sind bevorzugt.

### Aminoxid - Katalysatoren

Gegenstand der erfindungsgemäß eingesetzten Katalysatoren sind Aminoxide, genauer gesagt Amin-N-Oxide wie in Anspruch 1 beschrieben. Aminoxide sind erhältlich durch Reaktion von organischen tertiären Aminen mit Sauerstoff und Peroxid-verbindungen. Diese enthalten die Gruppe -N-O, die eine polare Bindung (-N⁺ O⁻) aufweist.

Aminoxide sind an sich bekannt und finden als Tenside in Waschmitteln und in Haarpflegemitteln Anwendung.

Das Aminoxid weist zumindest einen Kohlenwasserstoffrest mit β-Wasserstoffatom auf. Das Aminoxid wird durch folgende allgemeine Formel dargestellt: 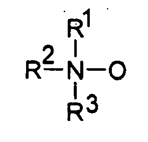 worin R¹, R² und R³ unabhängig voneinander für einen linearen oder verzweigten Kohlenwasserstoffrest mit 1 bis 6, Kohlenstoffatomen und besonders bevorzugt für Ethyl-, Propyl- oder Butyl steht. Es ist ebenso möglich, dass die Reste R¹, R² und/oder R³ Teil eines oder mehrer cyclischer Reste sind. Geeignete Verbindungen sind etwa: ..

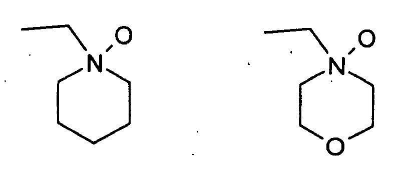

Der Kohlenwasserstoff-Rest kann seinerseits als Heteroatome Stickstoff und/oder Sauerstoff, beispielsweise in Form von Hydroxygruppen, Imin-, und/oder Amin-gruppen oder Ethergruppen tragen. Weiterhin kann das Aminoxid ein oder mehrere Aminoxid-Gruppen tragen.

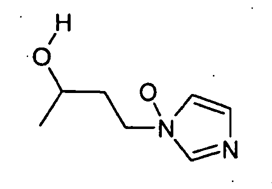

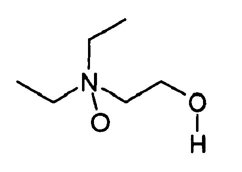

Es ist auch möglich, dass das Aminoxid andere katalytisch aktive Gruppen, wie eine weitere tertiäre Amingruppe trägt.

Derartige Verbindungen sind einfach aus den entsprechenden tertiären Diaminen durch partielle Oxidation mit Sauerstoff und/oder Peroxid-Verbindungen wie Wasserstoffperoxid erhältlich. Weitere Aminoxide bzw. deren Herstellung sind im Houben-Weyl, Teil I, Band E16a, S.404-420 und in der US 3,503,700 offenbart.

Das Aminoxid ist zu 0,05 bis 5 Gew.%, vorzugsweise zu 0,05 bis 2 Gew.-%, besonders bevorzugt zu 0,05 bis 1 Gew.-% in der Zusammensetzung, bezogen auf die Menge an eingesetzter Verbindung mit reaktiven Wasserstoffatomen, enthalten. Das Aminoxid wird vorzugsweise in gelöster Form bzw. als Flüssigkeit eingesetzt. Lösungsmittel kann sein Wasser, insbesondere für PU-2-Komponentenschäume, oder andererseits Dihydroxyalkane und/oder Glykolether, insbesondere für nicht wasserhaltige Formulierungen.

Besonders bevorzugt ist das Aminoxid ausgewählt aus der Gruppe bestehend aus Triethylamin-N-oxid, N-Ethylmorpholinoxid, N-Methylmorpholinoxid, und Diethylcyclohexylamin-N-oxid.

Die erfindungsgemäß eingesetzten Aminoxide erweisen sich auch deshalb als interessante Katalysatoren, weil diese - soweit sie bei erhöhten Temperaturen einen Alkylrest eliminieren - ein gegenüber der Isocyanatgruppe reaktives und einbaubares Amin-Derivat bilden können.

Ohne an die Theorie gebunden sein zu wollen, wird davon ausgegangen, dass sich im Wege der Hydro(dialkyloxidoammonio)elimination (Cope Eliminierung) ein fünfgliedriger Übergangszustand ausbildet, der unter Bindungsverschiebung eines β-Wasserstoffatoms und Bindungsbruch der N-C Bindung einen der Alklyreste in Form eines Olefins und unter Bildung eines (N)-Hydroxyl-(N)-Dialkylamin-Derivates eliminiert.

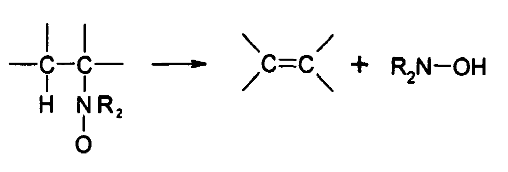

Das (N)-Hydroxyl-(N)-Dialkylamin weist eine gegenüber der Isocyanat-Verbindung hoch-reaktives Wasserstoffatom auf und kann somit in die Polymermatrix des Polyurethans bzw. Polyharnstoffs wirkungsvoll eingebaut werden. Überraschend hat sich gezeigt, dass obige Aminoxide der Cope-Elimierung bei der PU-Herstellung zugänglich sind und die Cope-Elimierung zu Derivaten führt, die vorteilhaft zur Herstellung emmisionsarmer Poyurethane genutzt werden kann.

Die Spaltung wird in der Regel thermisch initiiert, wobei die Temperatur maßgeblich von der Struktur des Aminoxids beeinflusst wird. So erfolgt die Spaltung einiger Aminoxide beispielsweise erst bei Temperaturen von 130 bis 150°C. Dies gilt z.B. für N-Ethylmorpholin-N-oxid und Triethylaminoxid.

Das jeweils entstandene Hydroxylamin kann mit noch nicht umgesetzten Isocyanatgruppen reagieren und wird so in den PUR-Kunststoff wirkungsvoll eingebaut. Das freiwerdende Olefin kann entweichen, wobei die freigesetzte Menge aufgrund der geringen Einsatzmenge gering ist.

Die erfindungsgemäß eingesetzten Aminoxide mit mehr als einer Aminoxid-Gruppe wirken als Kettenverlängerer (mindestens 2 Aminoxid-Gruppen) oder als Vernetzer (mindestens 3 Aminoxid-Gruppen).

Dies kann für die physikalischen Eigenschaften gezielt eingesetzt werden, z.B. kann hierdurch die Hydrolyseempfindlichkeit der Polyurethankunststoffe ganz wesentlich verringert werden. Es kann weiterhin interessant sein, ein Aminoxid mit mehr als einer Aminoxidgruppe als Katalysatoren einzusetzen, um im Reaktionsverlauf eine späte und gezielte Endaushärtung zu erreichen.

Die erfindungsgemäß hergestellten Polyurethane oder Polyharnstoffe werden zur Herstellung von Weichschäumen und/oder, Hartschäumen eingesetzt. Besonders vorteilhaft ist die Verwendung zur Herstellung von Polyurethanen, die in Bereichen eingesetzt werden, bei denen niedrige Fogging-Werte gefordert werden, wie im Automobil-Innenraum, bei Sitz- oder Liegepolstern oder für die Textilausrüstung.

Der erfindungsgemäße Katalysator weist gegenüber den bekannten PUR-Katalysatoren eine Reihe von Vorteilen auf. Überraschenderweise sind die ausgehärteten PUR-Kunststoffe geruchlos und weisen im Gegensatz zu Amin-katalysierten Kunststoffen keinen unangenehmen Geruch auf. Weiterhin ist bei der Herstellung von PUR-Schäumen der Druckaufbau beim Schaumaufbau überraschenderweise moderater und die Steighöhe größer verglichen mit der Verwendung von vergleichbaren tertiären Amin als Katalysatoren.

Zur Charakterisierung des gebildeten Schaums wird üblicherweise eine Steighöhen- oder Steigprofilmessung durchgeführt. Hierbei wird in einem geeigneten Gefäß das Expansionsverhalten einer Schaumprobe als Höhenveränderung gemessen und eine Startzeit, sowie eine Steigzeit bestimmt. Die Startzeit wird dabei dem Beginn der Reaktion von Hydroxylgruppe und Isocyanat gleichgesetzt, während die Steigzeit, der Zeitraum ist, der bis zum Erreichen der maximalen Steighöhe benötigt wird.

Bevor der Aushärtvorgang der PUR-Kunststoffs abgeschlossen ist, steht im wesentlichen bedingt durch die Treibreaktion, der Schaum unter einem Expansionsdruck, da stabile Zellwände ein Entweichen des sich bildenden Gases verhindern.

Die auftretenden Druckkräfte können so groß sein, dass sie zu einer Zerstörung des ein- oder auszuschäumenden Bauteils führen. Diese Druckkräfte werden üblicherweise als Steigdruck gemessen.

Die erfindungsgemäßen Polyurethan-Schaumstoffe zeichnen sich durch den Einsatz bestimmter Katalysatoren aus. Zur Herstellung der erfindungsgemäßen Polyurethan-Schaumstoffe werden die Ausgangskomponenten (1) bis (2) und (8) eingesetzt und gegebenenfalls die Kettenverlängerungs- und/oder Vernetzungsmittel (3) in Gegenwart von Treibmitteln (4), und gegebenenfalls Flammschutzmitteln (5) sowie weiteren Hilfsmitteln und/oder Zusatzstoffen ((6) oder (7)).

Die Umsetzung erfolgt vorzugsweise bei Starttemperaturen von über 15 °C, wobei weiterhin zumindest zeitweilig eine Temperatur von 80°C vorzugsweise sogar 130°C überschritten wird.

Mit den erfindungsgemäßen Katalysatoren können sowohl weichelastische, semiflexible Schaumstoffe als auch Integralschaumstoffe hergestellt werden. Bevorzugt sind PU-Weichschaumstoffe, die als Block- oder Formweichschäume für alle üblichen Anwendungen, insbesondere Blockweichschäume für den Polsterbereich, insbesondere Matratzen, zur Schallisolierung, für Innenausstattungen von Automobilen und zur Herstellung von Laminaten, hergestellt werden können.

### Synthese von N-Ethylmorpholin-N-oxid

100 g N-Ethylmorpholin wurden mit 100 ml Methanol versetzt, Zu dieser Lösung gab man langsam 101 ml 35 % H₂O₂. Dabei ließ man die Temperatur nicht über 60°C steigen. Nach Beendigung der H₂O₂-Zugabe wurde die Temperatur der Mischung solange weiter bei 50 bis 60°C, gehalten, bis der Amingeruch verschwindet. Man ließ abkühlen und gab dann eine kleine Menge von Platin auf Aktivkohle (5%) zu, um den Überschuss an H₂O₂ zu eliminieren. Nach Beendigung der Sauerstoffentwicklung wurde durch einen Faltenfilter filtriert.

Das Methanol wurde am Rotationsverdampfer abgezogen. Die zurückbleibende klare, farblose Lösung wurde bei 50°C am Vakuum bis zur Gewichtskonstanz eingedampft. Man erhielt 108 g an N-Ethylmorpholin-N-oxid Hydrat als Öl, das einige Zeit nach dem Abkühlen erstarrte. 94 % Ausbeute bezogen auf das N-Ethylmorpholin.

### Herstellung von Polyurethanschäumen unter Verwendung von N-Ethylmorpholinoxid bzw. Dimethylcyclohexylamin (nicht erfindungsgemäß).

Zur Herstellung eines Polyurethanschaums (Hartschaums) werden folgende Komponenten zusammengegeben:

**Tabelle 1**

| **Polyolblend:** | **Teile bez. auf das Gew.** |
|---|---|
| Caradol® LP 585-01 (Polyoxyalkylenpolyol, Huntsman) | 70 Teile |
| TR 310 (trifunktionelles Rizinuspolyol) | 30 Teile |
| TCPP (Trichlorpropylphosphat) | 7 Teile |
| Stabilisator PC Stab® SN 59 (Nitroil) | 1,5 Teile |
| Wasser | 1,7 Teile |
| 110 g Blend der vorgenannten Komponenten | |
| **Treibmittel** Pentan (= 14 g) | 11 Teile |
| **Katalysator** (DMCHA / EMO) | 1 Teil / 0,6 Teile |
| **Isocyanat** Caradate® 30 (MDI, Huntsman) | 188 Teile |

Als Katalysatoren wurden 0,6 Teile N-Ethylmorpholin-N-oxid (EMO) bzw. als Vergleichsversuch Dimethylcyclohexylamin (DMCHA, 1 Teil) eingesetzt.

Polyol-Komponenten, Treibmittel, Wasser, TCPP, Silikon-Verbindung (SN 59) und Katalysator wurden in einem Pappgefäß und einer Rührerdrehzahl von 3000 U/min vorgemischt. Darauf erfolgte die Zugabe des Isocyanates, wobei das Rühren kurzzeitig (ca. 12 sec) fortgesetzt wurde.

Der entstandene Schaum wird nach 2 h Aufschäumen aufgeschnitten und optisch beurteilt. Der Schaum entspricht optisch bezüglich der Korngrößen und der Bläschenverteilungen den mit Aminkatalysatoren hergestellten Schäumen.

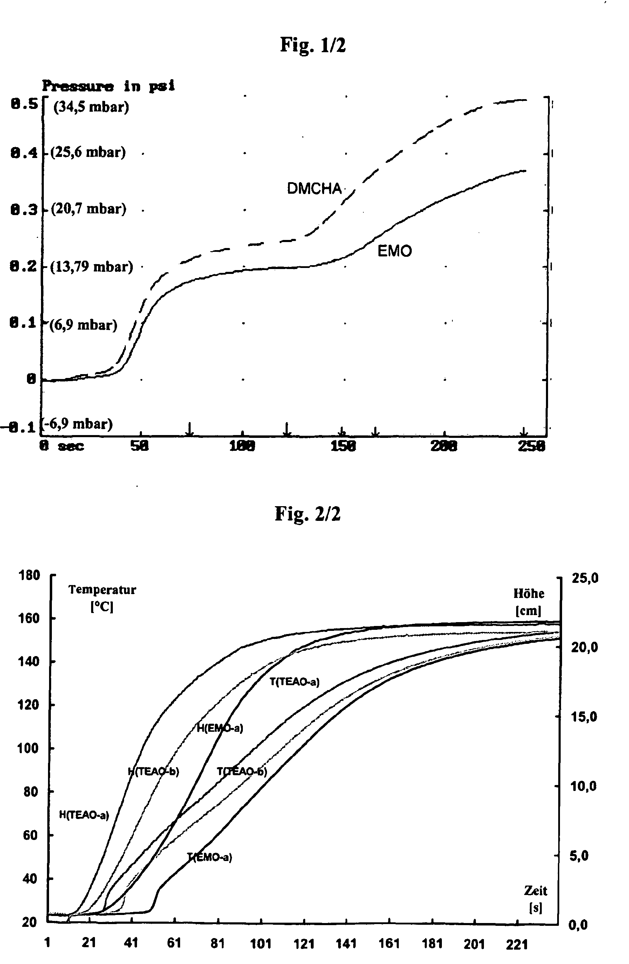

Der frei steigende Schaum wurde in ein einem 200 x 200 x 200 mm Pappgefäß hergestellt. Während des Schaumbildungsprozesses wurden Kremzeit, Gelzeit und Klebfreizeit mittels eines Tech DAPS 290 F Gerätes zur Bestimmung der Steigrate vermessen. Die Steighöhe wurde mit Ultraschall bestimmt, die Temperatur mittels Thermoelementen. Die Ergebnisse der Messungen sind in Tabelle 2 zusammengestellt. Die Messkurven sind in Fig. 1 (Druck in psi (mbar) gegen Zeit in sec.) aufgetragen.

**Tabelle 2**

| **Katalysator** | | **EMO** | **DMCHA** |
|---|---|---|---|
| **Steighöhe** | [mm] | 212,4 | 201,4 |
| **Steigzeit** | [s] | 172,4 | 143,7 |
| **Schwund** | [%] | 0,8 | 0,9 |
| **Max.Temperatur** | [°C] | 154,3 | 155,0 |
| **bei** | [s] | 442,5 | 367,9 |

Es zeigt sich, dass die Reaktion mit dem erfindungsgemäßen Katalysator EMO mit deutlich geringerer Einsatzmenge gegenüber der Reaktion mit DMCHA zeitlich verzögert abläuft, und eine längere Reaktionszeit erreicht wird. Trotzdem ist überraschend eine höhere Schaumausbeute zu beobachten. Umgerechnet auf eine 8 l Form würde dieses bei gleicher Einsatzmenge PUR-Prepolymer eine zusätzliche Schaummenge von 300-400 ml bedeuten. Die Klebfreizeiten sind in vergleichbarer Größenordnung.

Weiterhin wird bei Verwendung der erfindungsgemäßen Katalysatoren ein niedriger Druckaufbau (Steigdruck) beobachtet (Fig.1). So wurde nach 239 sec bei Verwendung von N-Ethylmorpholin-N-oxid (EMO) ein Druckaufbau von 2,56 kPa (0,371 psi) beobachtet, bei einer maximalen Druckaufbaurate von 17,2 Pa/s (0,0025 psi/s), erreicht nach 166 sec.. Während der Katalysator Dimethylcyclohexylamin (DMCHA) einen Druck von 3,42 kPa (0,496 psi) bei einer max. Druckaufbaurate von 24,8 Pa/s (0,0036 psi/s) nach 149 sec. lieferte. Die Messungen erfolgen mit dem Gerät FPM 2 der Firma Format Messtechnik GmbH.

### Herstellung eines Polyurethanschaums unter Verwendung von Triethylaminoxid (nicht erfindungsgemäß)

Es wurde ein PUR-Schaum hergestellt gemäß der in Tabelle 1 dargestellten Zusammensetzung, wobei als Katalysator unterschiedliche Mengen an Triethylamin-N-oxid eingesetzt wurden. Die Steighöhe in cm (H) und der Temperaturverlauf (T) in °C wurden gegen die Zeit in sec. aufgenommen und sind in Fig. 2 dargestellt. Eingesetzt wurden die Katalysatoren:

| | | | |
|---|---|---|---|
| (1a) | Triethylamin-N-oxid | (TEAO-a) | 0,83 Teile |
| (1b) | Triethylamin-N-oxid | (TEAO-b) | 0,58 Teile |
| (2a) | N-Ethylmorpholinoxid | (EMO-a) | 0,6 Teile |

Es zeigt sich, dass beide Katalysatoren zwar etwa gleich hohe Steighöhen liefern der Katalyator N-Ethylmorpholinoxid aber zeitverzögert wirkt und die Reaktionsmischung bei Verwendung von N-Ethylmorpholinoxid bei gleicher Reaktionszeit weniger Wärme entwickelt. Der Katalysator Triethylamin-N-oxid ist selbst bei geringerer Einsatzmenge reaktiver als N-Ethylmorpholinoxid oder Dimethylcyclohexylamin.

## Patentansprüche

1. Verfahren zur Herstellung von Polyurethanen und/oder Polyharnstoffen durch Umsetzung von
(A) Verbindungen enthaltend mindestens zwei Isocyanat-Gruppen mit
(B) Polyetherpolyolen, Polyesterpolyolen und/oderPolyetherestern, aufweisend jeweils Hydroxy-Gruppen und enthaltend jeweils mindestens zwei reaktive Wasserstoffatome,
in Gegenwart mehrerer Katalysatoren, wobei zumindest einer der Katalysatoren (C) ein Aminoxid der allgemeinen Formel (I) ist 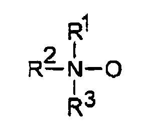 worin R¹, R² und R³ unabhängig voneinander für einen linearen oder verzweigten Kohlenwasserstoffrest mit 1 bis 6 Kohlenstoffatomen stehen,
die Reste R¹, R² und/oder R³ Teil eines oder mehrer zyklischer Reste sein können und
Stickstoff und/oder Sauerstoff enthalten können und
das Aminoxid mindestens einen an das Stickstoffatom gebundenen Rest mit β-Wasserstoffatom aufweist, und
das Aminoxid zu 0,05 bis 5 Gew.%, bezogen auf das Gewicht an eingesetzter Verbindung mit reaktivem Wasserstoffatom, eingesetzt wird, und
wobei
- die Umsetzung im wesentlichen die Bildung von Harnstoff- und/oder Urethan-Gruppen umfasst,
- bei der Umsetzung zeitweilig eine Temperatur von 50°C überschritten wird und die Umsetzung den Schritt der Cope-Eliminierung zumindest eines Aminoxid-Restes umfasst und
- zusätzlich Metallsalze organischer Verbindungen und/oder tertiäre Amine als Katalysatoren eingesetzt werden.

2. Verfahren gemäß Anspruch 1, **dadurch gekennzeichnet, dass** die Umsetzung in Gegenwart von Wasser erfolgt, vorzugsweise größer 0.1 Gew.% bezogen auf die Gesamtformulierung.

3. Verfahren gemäß zumindest einem der vorhergehenden Ansprüche, **dadurch gekennzeichnet, dass** zumindest zeitweilig bei der Umsetzung eine Temperatur 80°C überschritten wird.

4. Verfahren gemäß zumindest einem der vorhergehenden Ansprüche, **dadurch gekennzeichnet**, die Verbindungen(B) enthaltend mindestens zwei reaktive Wasserstoffatome ein Molekulargewicht von 150 bis kleiner 8000 g/mol aufweisen.

5. Verfahren gemäß zumindest einem der vorhergehenden Ansprüche, wobei zumindest ein R¹, R² und R³, unabhängig voneinander, für Ethyl, n- oder iso- Propyl oder n-, iso- oder tertiär- Butyl steht.

6. Verfahren gemäß zumindest einem der vorhergehenden Ansprüche, **dadurch gekennzeichnet, dass** das Aminoxid zumindest eine Ether-Bindung, eine weitere Aminoxid-Gruppe und/oder Amin-Gruppe vorzugsweise zumindest eine HydroxyGruppe aufweist.

7. Verfahren gemäß zumindest einem der vorhergehenden Ansprüche, **dadurch gekennzeichnet, dass** das Aminoxid mindestens einen -CH₂-CH₂- bzw. -CH₂-CH₃-Rest aufweist.

8. Verfahren gemäß zumindest einem der Ansprüche 1 bis 5, **dadurch gekennzeichnet, dass** das Aminoxid ausgewählt ist aus der Gruppe bestehend aus Triethylamin-N-oxid, N-Ethylmorpholin-N-oxid, N-Methylmorpholin-N-oxid, Dimethylcyclohexylamin-N-oxid, Ethyldicyclohexylamin-N-oxid, Diethylcyclohexylamin-N-oxid und Diethylpiperazin-N-oxid.

9. Verfahren gemäß einem der vorhergehenden Ansprüche, **dadurch gekennzeichnet, dass** das Aminoxid zu 0,05 bis 1 Gew.%, bezogen auf das Gewicht an eingesetzter Verbindung mit reaktiven Wasserstoffatomen, eingesetzt wird.

10. Verfahren gemäß einem der vorhergehenden Ansprüche, **dadurch gekennzeichnet, dass** das die Verbindungen enthaltend mindestens zwei reaktive Wasserstoffatome im wesentlichen aus einem Polyether mit zumindest zwei freien Hydroxygruppen besteht.

11. Verfahren gemäß einem der vorhergehenden Ansprüche, **dadurch gekennzeichnet, dass** neben den Aminoxiden keine tertiären Aminkatalysatoren eingesetzt werden.

12. Zusammensetzung enthaltend die Komponenten (A), (B) und (C) gemäß einem der vorhergehenden Ansprüche und weiterhin eine oder mehrere Tcnsid-Verbindungen als Stabilisatoren, wobei die Tensid-Verbindungen Silikone sind.

13. Verwendung der Zusammensetzung gemäß Anspruch 12 zur Herstellung von Amin-emissionsarmen Polyurethan- und/oder Polyharnstoff- Schäumen mit einer Dichte von kleiner 80 kg/m³, insbesondere kleiner 40 kg/m³, wobei das in einem der vorhergehenden Ansprüche definierte Aminoxid bzw. dessen Folgeprodukte als Polyurethan- und/oder Polyharnstoff- Katalysator wirkt.

14. Amin-emissionsarme Polyurethan- und/oder Polyharnstoff- Schäume hergestellt gemäß einem der Verfahren nach den Ansprüchen 1 bis 11.

## Claims

1. A process for the manufacture of polyurethanes and/or polyureas by conversion of
(A) compounds comprising at least two isocyanate groups with
(B) polyether polyols, polyester polyols and/or polyether esters, each comprising hydroxy groups and each comprising at least two reactive hydrogen atoms,
in the presence of several catalysts, wherein at least one of the catalysts
(C) is an amine oxide of the general formula (I) 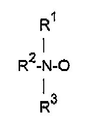
- wherein R¹, R² and R³ independently of each other are linear or branched hydrocarbon residues with 1 to 6 carbon atoms,
the residues R¹, R² and/or R³ may be part of one or more cyclic residues, and may comprise nitrogen and/or oxygen, and
- the amine oxide has at least one residue having a β-hydrogen atom bound to the Nitrogen-atom,
- the amine oxide is used at 0.01 to 5 % by weight based on the weight of compounds used with reactive hydrogen atoms, and
wherein
- the conversion primarily comprises the creation of urea- und or urethane groups,
- during conversion a reaction temperature of 50° C is exceeded and the conversion comprises the step of Cope elimination of at least one amine oxide residue, and
- additionally metal salts of organic compounds and/or tertiary amines are used as catalysts.

2. Process according to claim 1, **characterized in that** the conversion takes place in the presence of water, preferably above 0.1 % by weight relative to total composition.

3. Process according to at least one of the preceding claims, **characterized in that at** least temporarily during conversion a reaction temperature of 80°C is exceeded.

4. Process according to at least one of the preceding claims, **characterized in that** compound (B) comprising at least two reactive hydrogen atoms comprises a molecular weight of 150 to below 8000 g/mol.

5. Process according to at least one of the preceding claims, wherein at least one R¹, R² and R³, independently of each other, stands for ethyl, n- or iso-propyl or n-, iso- or tertiary butyl.

6. Process according to at least one of the preceding claims, **characterized in that** the amine oxide comprises at least on ether bond, one further amine oxide group and/or amine group, preferably at least on hydroxy group.

7. Process according to at least one of the preceding claims, **characterized in that** the amine oxide comprises at least one -CH₂-CH₂- and/or -CH₂-CH₃ residue.

8. Process according to at least one of claims 1 to 5, **characterized in that** the amine oxide is selected from the group consisting of triethylamine-N-oxide, N-ethylmorpholine-N-oxide, N-methylmorpholine-N-oxide, dimethylcyclohexylamine-N-oxide, ethyldicyclohexyl-amine-N-oxide, diethycyclohexylamine-N-oxide and diethypiperzine-N-oxide.

9. Process according to one of the preceding claims, **characterized in that** the amine oxide is used at 0.05 to 1 % by weight, based on the total weight of the compounds with reactive hydrogen atoms used.

10. Process according to one of the preceding claims, **characterized in that** the compounds containing at least two reactive hydrogen atoms consist mainly of a polyether with at least two free hydroxy groups.

11. Process according to one of the preceding claims, **characterized in that** besides the amine oxides no tertiary amine catalysts are used.

12. Composition comprising the components (A), (B) and (C) according to one of the preceding claims and further one or more surfactant compounds as stabilizers, wherein the surfactant compounds are silicones.

13. Use of a composition according to claim 12 for the manufacture of low amine emission polyurethane and/or polyurea foams with a specific weight of below 80 kg/m³, preferably below 40 kg/m³, wherein the amine oxide or its secondary product defined in one of the proceeding claims is used as a polyurethane and/or polyurea catalyst.

14. Low amine emission polyurethane and/or polyurea foams manufactured according to a process according of one of claims 1 to 11.

## Revendications

1. Procédé de préparation de polyuréthanes et/ou de polyurées par conversion :
(A) de composés comprenant au moins deux groupes isocyanates avec
(B) des polyéther-polyols, polyester-polyols et/ou polyéther-esters comprenant respectivement des groupes hydroxy et comprenant respectivement au moins deux atomes d'hydrogène réactifs,
en présence de plusieurs catalyseurs, où au moins un des catalyseurs est
(C) un aminoxyde de formule générale (I) 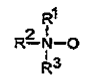 dans laquelle R¹, R² et R³ représentent, indépendamment les uns des autres, un radical hydrocarboné linéaire ou ramifié, comprenant de 1 à 6 atomes de carbone,
les radicaux R¹, R² et/ou R³ peuvent faire partie d'un ou de plusieurs radicaux cycliques et
peuvent comprendre de l'azote et/ou de l'oxygène et
l'aminoxyde comprend au moins un radical lié à l'atome d'azote ayant un atome d'hydrogène β, et
l'aminoxyde est utilisé à un taux de 0,05 à 5 % en poids, par rapport au poids du composé mis en oeuvre avec l'atome d'hydrogène réactif, et
où
- la conversion comprend essentiellement la formation de groupes urée et/ou uréthane,
- lors de la conversion, une température de 50°C est dépassée temporairement et la conversion comprend l'étape d'élimination de Cope d'au moins un radical d'aminoxyde et
- des sels métalliques de composés organiques et/ou d'amines tertiaires sont utilisés, en plus, comme catalyseurs.

2. Procédé selon la revendication 1, **caractérisé en ce que** la conversion s'effectue en présence d'eau, de préférence à un taux supérieur à 0,1 % en poids, par rapport à la formulation totale.

3. Procédé selon au moins l'une des revendications précédentes, **caractérisé en ce que**, lors de la conversion, une température de 80°C est dépassée au moins temporairement.

4. Procédé selon au moins l'une des revendications précédentes, **caractérisé en ce que** les composés (B) comprenant au moins deux atomes d'hydrogène réactifs présentent un poids moléculaire de 150 moins de 8000 g/mol.

5. Procédé selon au moins l'une des revendications précédentes, **caractérisé en ce qu'**au moins un radical R¹, R² et R³, indépendamment les uns des autres, représente un groupe éthyle, n- ou iso-propyle, ou n-, iso- ou tert.-butyle.

6. Procédé selon au moins l'une des revendications précédentes, **caractérisé en ce** l'aminoxyde présente au moins une liaison éther, un autre groupe aminoxyde et/ou un groupe amine, de préférence au moins un groupe hydroxy.

7. Procédé selon au moins l'une des revendications précédentes, **caractérisé en ce que** l'aminoxyde présente au moins un radical -CH₂-CH₂- ou -CH₂-CH₃-.

8. Procédé selon au moins l'une des revendications 1 à 5, **caractérisé en ce que** l'aminoxyde est choisi dans le groupe constitué par le N-oxyde de triéthylamine, le N-oxyde de N-éthylmorpholine, le N-oxyde de N-méthylmorpholine, le N-oxyde de diméthylcyclohexylamine, le N-oxyde d'éthyldicyclohexylamine, le N-oxyde de diéthylcyclohexylamine et le N-oxyde de diéthylpipérazine.

9. Procédé selon au moins l'une des revendications précédentes, **caractérisé en ce que** l'aminoxyde est mis en oeuvre à un taux de 0,05 à 1 % en poids, par rapport au poids du composé mis en oeuvre avec les atomes d'hydrogène réactifs.

10. Procédé selon au moins l'une des revendications précédentes, **caractérisé en ce que** les composés comprenant au moins deux atomes d'hydrogène réactifs se composent essentiellement d'un polyéther comprenant au moins deux groupes hydroxy libres.

11. Procédé selon au moins l'une des revendications précédentes, **caractérisé en ce que**, en plus des aminoxydes, aucun catalyseur à l'amine tertiaire n'a été mis en oeuvre.

12. Composition comprenant les composants (A), (B) et (C) selon l'une des revendications précédentes, et en plus un ou plusieurs composés tensioactifs comme stabilisateurs, où les composés tensioactifs sont des silicones.

13. Utilisation de la composition selon la revendication 12 pour la fabrication de mousses de polyuréthane et/ou de polyurée à faible émission d'amines, ayant une densité inférieure à 80 kg/m³, en particulier inférieure à 40 kg/m³, où l'aminoxyde défini dans l'une des revendications précédentes ou ses produits dérivés agit ou agissent en tant que catalyseur(s) du polyuréthane et/ou de la polyurée.

14. Mousses de polyuréthane et/ou de polyurée à faible émission d'amines fabriquées d'après l'un des procédés selon les revendications 1 à 11.
